# EUROPEAN PATENT SPECIFICATION

(11) **EP 1 646 288 B1**
(45) Date of publication and mention of the grant of the patent: **26.09.2007**
(21) Application number: 04724600.4
(22) Date of filing: 31.03.2004
(51) Int. Cl.: A23G 9/22, A23G 9/26, A23G 3/02, B65B 3/02, B65D 85/78

(54) **METHOD AND APPARATUS FOR PACKAGING AND PACKAGING UNIT**
VERFAHREN UND VORRICHTUNG ZUM VERPACKEN UND VERPACKUNGSEINHEIT
PROCEDE ET APPAREIL D'EMBALLAGE ET UNITE D'EMBALLAGE

(30) Priority: 04.04.2003 IT MO20030093
(43) Date of publication of application: 19.04.2006
(73) Proprietor: Sarong Societa'Per Azioni, 42046 Reggiolo (IT)
(72) Inventor: BARTOLI, Andrea, I-42100 Reggio Emilia (IT); FINETTI, Primo, I-41037 Mirandola (IT)
(74) Representative: Luppi, Luigi
(86) International application number: PCT/EP2004/003410
(87) International publication number: WO 2004/086875

(56) References cited:
- WO-A-95/05749
- GB-A- 533 502
- US-A- 4 478 386

## Description

The invention relates to a method and an apparatus for packaging a product and a respective packaging unit.

US4478386 discloses a bag for use in the shaping of liquid food products or stimulants. The bag consists of two plastics foils, which are welded together in an area of the two foils so as to provide a plurality of interconnected mould cavities with a common inlet. In the mould cavities there are placed sticks.

GB533502 discloses a process of making or forming and covering an article with a removable wrapper. The process comprises holding together the edges of plies of a wrapping material and injecting the article while in plastic form between the plies with sufficient pressure to expand the wrapping material and to form the article while in contact with the wrapping material.

WO-A-95/05749 discloses a method, an apparatus and a packaging unit having the features of the preambles of claims 1, 10 and 16.

WO-A-95/05749 discloses a method for packaging an edible product comprising:
- forming a packaging unit envelope comprising a pocket portion and a tubular portion the inside of which communicates with the inside of the pocket portion, with a handle extending along the tubular portion and from here into the pocket portion,
- filling the pocket portion through an opening of said packaging unit envelope with an edible fluid,
- inserting the handle into said tubular portion after the tubular portion has been formed and before the pocket portion is filled.

Such method thereby relates to a process that, once it is carried out, ends with the fabrication of a packaging unit envelope containing an edible product and having a pocket portion and a tubular portion.

Since the handle is introduced into the tubular portion after this latter has been formed, the handle must be introduced through the same opening used for introducing the product into the pocket portion and, thereby must have cross dimensions smaller than the cross dimensions of the opening.

WO-A-95/05749 further discloses a packaging unit comprising a packaging unit envelope consisting of a pocket portion and a tubular portion whose interior communicates with the interior of the pocket portion, with a handle extending along the tubular portion and from here into the pocket portion, an edible product inside the pocket portion, the pocket portion having an upper welding at its upper end and said tubular portion being surrounded by a lower welding, said pocket portion and said tubular portion consisting of a pair of facing shells, said upper welding and said lower welding being part of a substantially continuous welding around the edge of the pocket portion and the tubular portion.

In such packaging unit are further provided borders, not welded, that enable the shells to be moved away one from another along the welding that runs along the periphery of the packaging unit.

Such borders result, however, mutually superimposed and therefore are difficult to be separated, for a user, in order to proceed with mutually separating the shells. In any case, in the opening operation, the handle can not be accessed before the borders are opened.

In addition, since the lower welding, defining the tubular portion, completely surrounds the handle, this latter is not visible, neither accessible by a user.

An object of the invention is to improve the known packaging units and their respective producing methods.

Another object is to provide a method in which a packaging unit can be provided with a handle having cross dimensions not conditioned by the cross dimensions of the opening for introducing the product.

A further object is to make available a method for producing a packaging unit and a packaging unit provided with a handle, in which the handle results visible and easy to be grabbed by a user also before the packaging unit has been opened.

A still further object is to make available a method for producing a packaging unit and a packaging unit provided with catching borders for enabling opening thereof, in which the catching borders are easy to be grabbed by a user.

In a first aspect of the invention, there is provided a method according to claim 1.

In a second aspect of the invention, there is provided an apparatus according to claim 10.

Thus, it is non more necessary to provide that the handle is introduced into the pocket means through the same opening used for forming and filling the pocket means.

Thereby, it is possible to provide a handle with cross dimensions also greater than the cross dimensions of said opening .

In a third aspect of the invention, there is provided a packaging unit according to claim 16.

Thus, the handle lies in a position easily accessible by a user that can hold the handle while opening the packaging unit.

A way of carrying out the invention is disclosed, merely by way of example, in the attached drawing tables, in which:
Figure 1 is a schematic side view of an apparatus carrying out the method according to the invention;
Figure 2 is a section taken along a plane II-II of Figure 1;
Figure 3 is a front interrupted and enlarged view of a portion of welding mould and of a portion of sheet material contained therein;
Figure 4 is a section taken along a plane IV-IV of Figure 1;
Figure 5 is a view like Figure 3, but relative to a part of forming mould;
Figure 6 is a section taken along a plane VI-VI of Figure 1;
Figure 7 is a front interrupted and enlarged view, of a section of thermoformed sheet material at a shearing station;
Figure 8 is a section taken along a plane VIII-VIII of Figure 1;
Figure 9 is a view like Figure 3, but relative to a further version;
Figure 10 is a view like Figure 5, but relative to a further version;
Figure 11 is a front, partially interrupted view, of a packaging unit according to the invention;
Figure 12 is a section taken along a plane XII-XII of Figure 11.

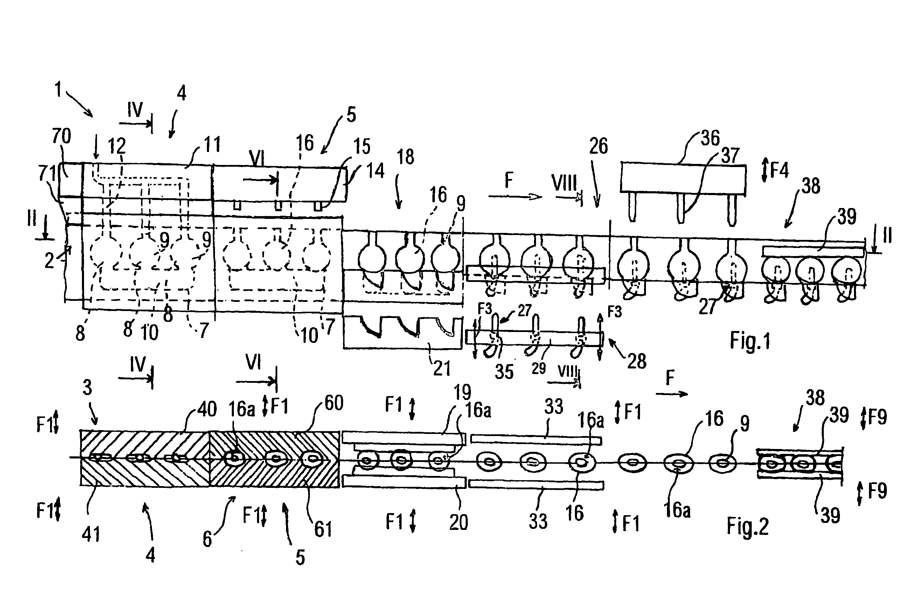

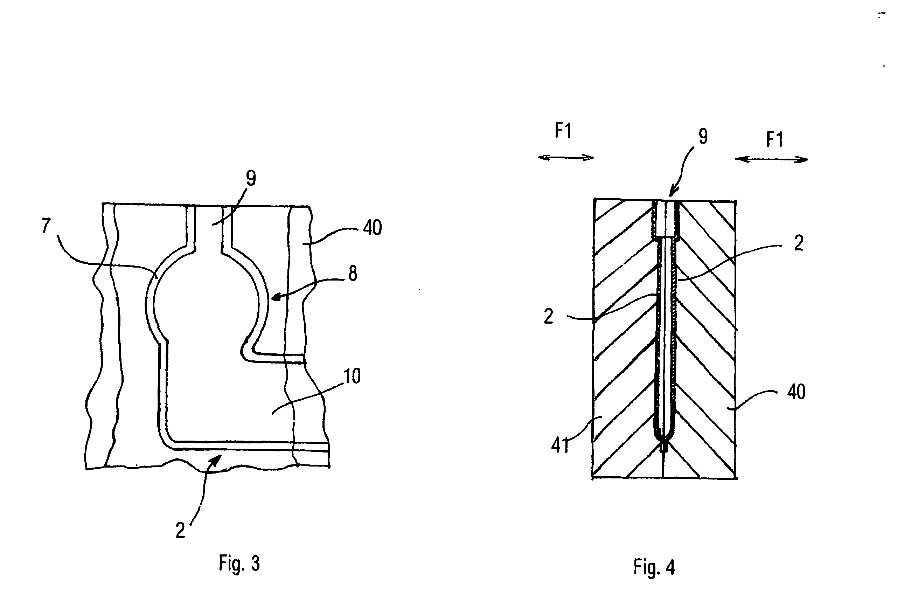

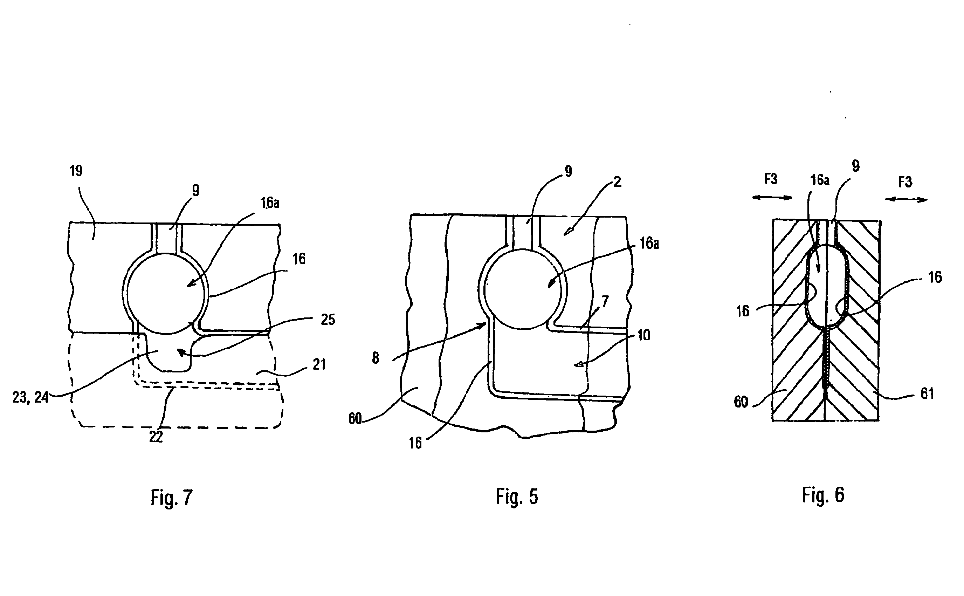

With reference to Figures 1 to 8, is shown an apparatus 1 comprising a welding station 4 in which a pair of borders of sheet material 2 is indexed along an advancing direction F across a pair of welding moulds 3 in order to be subsequently advanced towards a forming station 5 provided with a pair of forming moulds 6.

Upstream to the welding station 4 there is arranged a separator element 70, provided with an end 71 wedge-like shaped and oriented towards edge zones of the sheet material 2 in order to keep separated one from the other the edges of the sheet material 2.

The pair of welding moulds 3 comprises a first part of welding mould 40 and a second part of welding mould 41, both moving along the translation direction, transversal with respect to the advancing direction F, between a rest position, not shown, in which they are spaced apart from the sheet material 2, and a working position, shown in Figure 2, in which the mould parts 40 and 41 tighten the sheet material 2, so as to weld the two borders one with the other along a welding contour 7.

The first part of welding mould 40 and the second part of welding part 41 are so shaped that the welding contour 7 defined by them identifies on the sheet material 2 a plurality of pockets 8 mutually communicating through a duct 10.

Each pocket 8 is provided with an opening 9 suitable for enabling a forming fluid to enter the interior of the pockets 8, said forming fluid being introduced, by means of first injection means 11, provided with first injection nozzles 12, into the pockets 8 so as to keep spaced apart the borders of the sheet material 2. The first injection nozzles 12 are positioned so as to define the openings 9.

The borders of sheet material 2 pass then through a forming station 5, in which the pair of forming moulds 6 comprising a first part of forming mould 60 and a second part of forming mould 61, is moving along the translation direction F1, between a further rest position, not shown, in which said pair of forming moulds 6 is spaced apart from the sheet material 2, and a further working position, shown in Figure 2, in which the first part of forming mould 60 and the second part of forming mould 61 tighten the sheet material 2 between them.

When the pair of forming moulds 6 is in the further working position, second injection means 14 injects, by means of further nozzles 15, introduced into the openings 9, between the borders of sheet material 2, a forming fluid, preferably air.

The forming fluid causes some parts of the sheet material 2 to swell up until to make them to adhere to internal surfaces of the first part of forming mould 60 and the second part of forming mould 61.

Therefore, on each border of sheet material 2 is defined a portion 16 of container wall defining, together with the corresponding portion 16 of container wall of the other border, with which said portion 16 is connected by means of the welding contour 7, a cavity 16a of container. The cavities 16a of container mutually communicate by means of the duct 10.

The sheet material 2 is then advanced through a shearing station 18 comprising a first shearing mould 19 and a second shearing mould 20, both moving along the translation direction F1, between a still further rest position, not shown, in which they are spaced apart from the sheet material 2, and a still further working position, shown in Figure 2, in which they operate on the sheet material 2 to separate from the sheet material 2 a reject portion 21.

The first shearing mould 19 and the second shearing mould 20 are so shaped that the reject portion 21 comprises a portion of the duct 10 and a peripheral portion 22 of the duct 10 opposed to each opening 9.

As a consequence of the shearing operation, each cavity 16a of container is then provided with an opening 9 and a further opening 25 arranged at the opposing side of each cavity 16a with respect to the opening 9.

The further opening 25 is defined by a first border 23 and a second border 24 of the sheet material 2, both obtained from the duct 10.

The dimensions of the further opening 25, considered in the advancing direction F, can be varied by properly shaping the first shearing mould 19 and the second shearing mould 20, regardless of the dimensions of the opening 9.

The sheet material 2 is then advanced through an inserting station 26, in which an appropriate insert 27, having the function of handle, is introduced into each pocket 8 at the further opening 25, so that the insert 27 extends partially into the interior of the cavity 16a of container and partially outside said cavity 16a, in a configuration in which the insert 27 lies interposed between the first border 23 and the second border 24.

The insert 27 is tightened between proper catching means 28, comprising a pair of grippers 29, moving along a further translation direction F2, between a first rest configuration, in which said catching means 28 is spaced apart from the inserts 27, and a catching configuration, in which the pair of grippers 29 is tightened on the inserts 27.

The catching means 28, after having tightened the inserts 27, translates along the still further translating direction F3, so as to bring itself from the catching position to an inserting position, in which each insert 27 is introduced into the corresponding cavity 16a of container through the respective further opening 25.

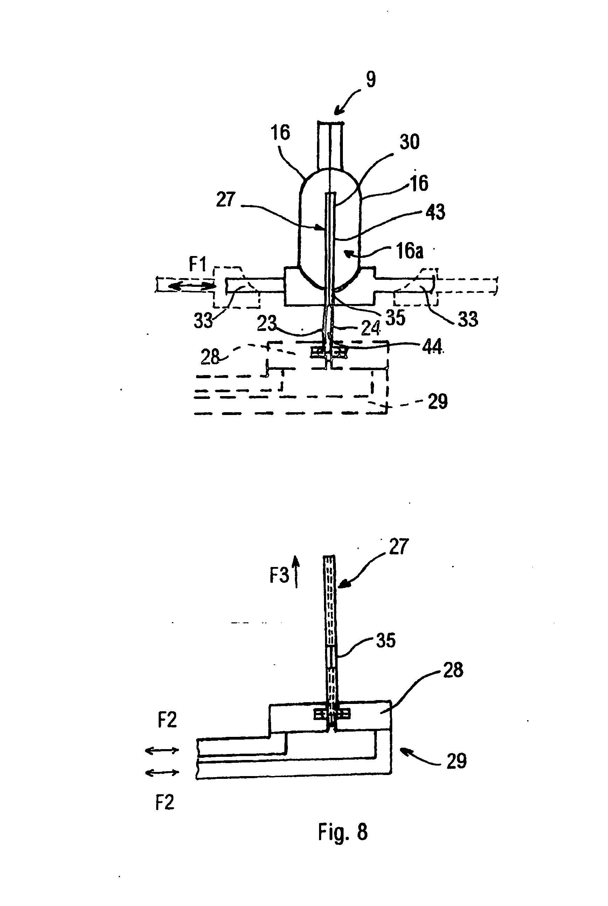

In the inserting station 26 is further provided a pair of welding jaws 33 movable along the translation direction F1, between a first rest configuration shown in Figure 2, in which they are spaced apart from the sheet material 2, and a tightening configuration, shown in Figure 8, in which they tighten the sheet material 2 on a central portion 35 of each insert 27, by closing in this way the further openings 25.

The central portion 35 is so shaped as to enable a good adherence of the insert 27 to the sheet material 2.

Subsequently, the sheet material 2 is moved towards a filling station 36 in which a desired product is introduced into the cavities 16a of container.

The filling station 36 comprises further injection nozzles 37 arranged for being introduced into the openings 9 by translating along the direction represented by the arrows F4, between a moved away position, shown in Figure 1, in which the further injection nozzles 37 are moved away from the openings 9, and an injection position, not shown, in which the further injection nozzles 37 are coupled with the openings 9 and inject the product into the cavities 16a of container.

The sheet material 2 is then moved towards a sealing station 38 comprising a pair of sealing moulds 39 arranged for welding the borders of the sheet material 2 at each opening 9 of the pockets 8 so as to produce a sealing 42 of the opening 9, and towards a separating station, not shown, in which packaging units 100, singularly or by groups, are separated from the sheet material 2.

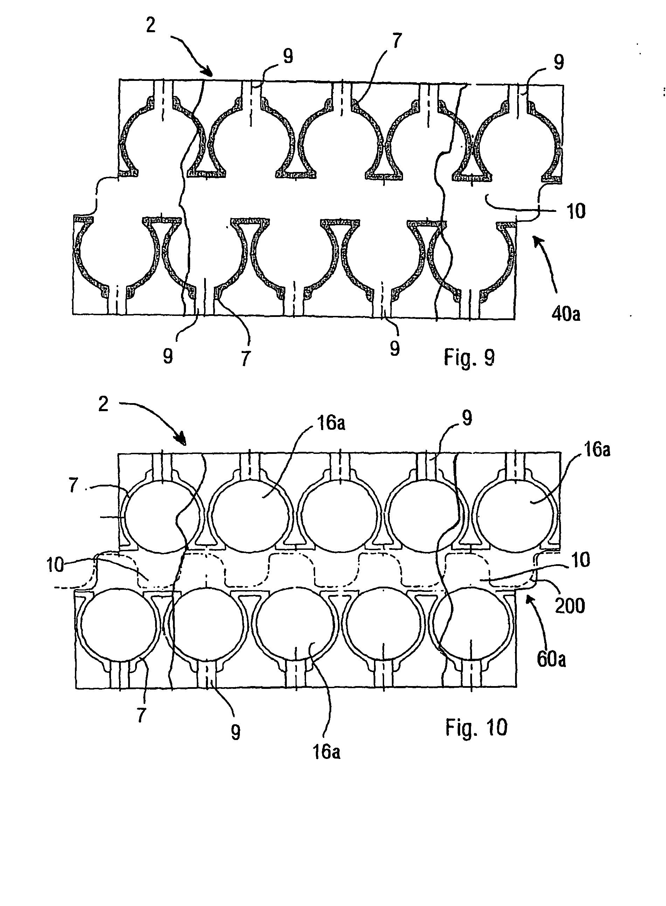

In the version of Figure 9, is shown a variant of the apparatus 1 in which a portion of welding mould 40a is provided, arranged for producing on the sheet material 2 two parallel rows of welding contours 7 identifying respectively two parallel rows of pockets 8 that mutually communicate via a duct 10 and show respective openings 9 oriented towards edge zones of the sheet material 2.

In the version of Figure 10, in corresponding manner, is shown a portion of forming mould 60a arranged for obtaining two rows of cavities 16a of container that are mutually aligned and show respective openings 9 still oriented towards the edges of the sheet material 2.

In the welding stations 4 and in the forming stations 5 relative to the versions represented in the Figures 9 and 10, insertion of a forming fluid takes place at both longitudinal edge regions of the sheet material 2 in which the openings 9 lead.

The versions represented in the Figures 9 and 10 enable to reduce the waste of material in the shearing station 18, since the rows of cavities 16a of container can be separated along a shearing line 200, developing longitudinally along the duct 10.

In such version, downstream to the shearing station and before filling, a overturning station may be provided, for example as disclosed in PCT/IT01/00560, for overturning that row of cavities 16a of container having, in the case, the openings 9 oriented downwards.

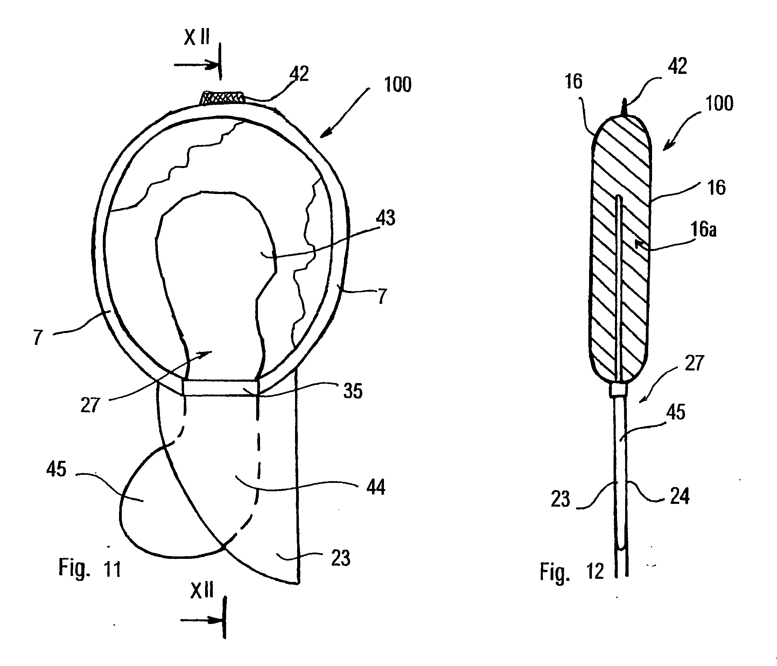

With reference to the Figures 11 and 12, is shown a packaging unit 100 provided with a cavity 16a of container defined by portions 16 of container wall mutually interconnected along a welding contour 7 and a sealing 42 arranged for closing an opening 9 suitable for enabling a product to be introduced into the interior of the cavity 16a of container.

An insert 27 is introduced into the packaging unit 100, said insert 27 being so arranged that a first its own portion 43 is internal to the cavity 16a of container, a central its own portion 35 is welded to the sheet material 2, and that a further its own portion 44 is external to the cavity 16a of container and partially interposed between the first border 23 and the second border 24 of the sheet material 2.

The central portion 35 of the insert 27 is seal-welded to the sheet material 2, so that the insert 27 is interposed between the two borders of sheet material 2.

A peripheral region 45 of the further portion 44 is so shaped as to protrude from the first border 23 and from the second border 24 of the sheet material 2, thus being clearly visible and accessible to a user, that can comfortably use said peripheral region 45 as catching means of the packaging unit 100.

Furthermore, by holding the packaging unit 100 at the peripheral region 45 of the insert 27, the first border 23 and the second border 24 can be easily separated in order to open the packaging unit 100 and then to have access to the product contained into the cavity 16a.

## Claims

1. Method of packaging a product, comprising forming a cavity (16a) for containing the product by injecting a forming fluid through an opening (9) of a pocket means (8), supplying a handle (27) partially extending into said cavity (16a), **characterised in that**, said supplying comprises forming a further opening (25) in said pocket means (8) and introducing said handle (27) through said further opening (25).

2. Method according to the preceding claim, wherein said introducing comprises partially interposing said handle (27) between borders (23, 24) of said pocket means (8).

3. Method according to claim 1, or 2, and further comprising sealing said further opening (25).

4. Method according to claim 3 as appended to claim 2, wherein said sealing comprises seal-tightening said borders (23, 24) on a portion (35) of said handle (27).

5. Method according to any one of claims 1 to 4, wherein said forming comprises swelling up walls of sheet material (2) in order to define a plurality of cavities (16a) mutually communicating through a duct (10).

6. Method according to any one of claims 1 to 5, and further comprising welding said pocket means (8) along a welding contour (7).

7. Method according to any one of claims 1 to 6, wherein said forming a further opening comprises shearing a reject portion (21) from said pocket means (8).

8. Method according to any one of claims 1 to 7, wherein said introducing comprises holding said handle (27) by means of catching means (29) of said handle (27).

9. Method according to any one of claims 1 to 8, wherein said introducing comprises moving said handle (27) with catching means (29) of said handle (27).

10. Apparatus (1) for packaging a product, comprising a forming station (5) in which a cavity (16a) is formed by injecting a forming fluid through an opening (9) of a pocket means (8), an inserting station (26) in which a handle (27),is partially inserted into the interior of said cavity (16a), **characterised in that** between said forming station (5) and said inserting station (26) there is provided a shearing station (18) in which a further opening (25) in said pocket means (8) is obtained, through which further opening (25) said handle (27) is introduced.

11. Apparatus according to claim 10, and further comprising a welding station (4) arranged for welding said pocket means (8) along a welding contour (7).

12. Apparatus according to claim 10 or 11, wherein said inserting station (26) comprises catching means (29) arranged for tightening said handle (27) and introducing said handle (27) into said pocket means (8).

13. Apparatus according to any one of claims 10 to 12, wherein said inserting station (26) comprises jaws means (33) arranged for welding a portion (35) of said handle (27) between borders (23, 24) of said pocket means (8).

14. Apparatus according to any one of claims 10 to 13, and further comprising a filling station (36) arranged for pouring a desired product into said cavity (16a) through said opening (9) of said pocket means (8).

15. Apparatus according to any one of claims 10 to 14, and further comprising a sealing station (38) arranged for sealing said opening (9) of said pocket means (8).

16. Packaging unit (100), comprising pocket means (8) provided with a cavity (16a) containing a product, a sealed opening (9) through which said product was inserted into said cavity (16a), and a handle (27) having an internal portion (43) extending into the interior of said cavity (16a) through a further opening (25) in said pocket means (8) and an external portion (44, 45) extending externally of said cavity (16a), **characterized in that** said external portion (44, 45) of said handle (27) is comprised between a pair of non-welded borders (23, 24) of said packaging unit (100), said handle (27) comprising a shaped central portion (35) between said internal and external portions welded between said borders (23, 24) of said packaging unit (100) at said further opening (25).

17. Packaging unit according to claim 16, wherein said external portion (44, 45) of said handle (27) comprises an end (45) external to said borders (23, 24) of said packaging unit (100).

18. Packaging unit according to claim 16 or 17, and further comprising a welding contour (7) arranged for externally delimiting said cavity (16a) of said packaging unit (100).

19. Packaging unit according to any one of claims 16 to 18, wherein said central portion (35) is thicker than said internal portion (43) and said external portion (44, 45).

## Patentansprüche

1. Verfahren zum Verpacken eines Produkts, mit einem Formen eines Hohlraums (16a) zum Aufnehmen des Produkts durch Einspritzen eines Formungsfluids durch eine Öffnung (9) eines taschenförmigen Mittels (8), einem Bereitstellen eines Griffs (27), der sich teilweise in den Hohlraum (16a) erstreckt, **dadurch gekennzeichnet, dass** das Bereitstellen ein Formen einer weiteren Öffnung (25) in den taschenförmigen Mitteln (8) und ein Einführen des Griffs (27) durch die weitere Öffnung (25) beinhaltet.

2. Verfahren nach dem vorhergehenden Anspruch, wobei das Einführen ein teilweises Einbringen des Griffs (27) zwischen den Begrenzungen (23, 24) des taschenförmigen Mittels (8) beinhaltet.

3. Verfahren nach Anspruch 1 oder 2, ferner mit einem Verschließen der weiteren Öffnung (25).

4. Verfahren nach Anspruch 3, sofern abhängig von Anspruch 2, wobei das Verschließen ein Abdichten der Begrenzungen (23, 24) auf einem Abschnitt (35) des Griffs (27) beinhaltet.

5. Verfahren nach einem der Ansprüche 1 bis 4, wobei das Formen ein Ausbuchten von Wänden aus einem blattförmigen Material (2) beinhaltet, um eine Vielzahl von Hohlräumen (16a) zu definieren, die über einen Kanal (10) miteinander verbunden sind.

6. Verfahren nach einem der Ansprüche 1 bis 5, ferner mit einem Verschweißen des taschenförmigen Mittels (8) entlang einer Schweißkontur (7).

7. Verfahren nach einem der Ansprüche 1 bis 6, wobei das Formen einer weiteren Öffnung ein Abscheren eines abgesonderten Teils (21) des taschenförmigen Mittels (8) beinhaltet.

8. Verfahren nach einem der Ansprüche 1 bis 7, wobei das Einführen ein Halten des Griffs (27) durch Fangmittel (29) des Griffs (27) beinhaltet.

9. Verfahren nach einem der Ansprüche 1 bis 8, wobei das Einführen ein Bewegen des Griffs (27) mit Fangmitteln (29) des Griffs (27) beinhaltet.

10. Vorrichtung (1) zum Verpacken eines Produkts, mit einer Formungsstation (5), in der ein Hohlraum (16a) gebildet wird, indem ein Formungsfluid durch eine Öffnung (9) von einem taschenförmigen Mittel (8) eingespritzt wird, mit einer Einfügestation (26), in der ein Griff (27) teilweise in das Innere des Hohlraums (16a) eingefügt wird, **dadurch gekennzeichnet, dass** zwischen der Formungsstation (5) und der Einfügestation (26) eine Scherstation (18) angeordnet ist, in der eine weitere Öffnung (25) in dem taschenförmigen Mittel (8) erzeugt wird, wobei durch die weitere Öffnung (25) der Griff (27) eingeführt wird.

11. Vorrichtung nach Anspruch 10, ferner mit einer Schweißstation (4), die dafür ausgebildet ist, das taschenförmige Mittel (8) entlang einer Schweißkontur (7) zu verschweißen.

12. Vorrichtung nach Anspruch 10 oder 11, wobei die Einfügestation (26) Fangmittel (29) aufweist, die dafür ausgebildet sind, den Griff (27) festzuhalten und den Griff (27) in das taschenförmige Mittel (8) einzuführen.

13. Vorrichtung nach einem der Ansprüche 10 bis 12, wobei die Einfügestation (26) Backenmittel (33) aufweist, die dafür ausgebildet sind, einen Bereich (35) des Griffs (27) zwischen den Begrenzungen (23, 24) des taschenförmigen Mittels (8) zu schweißen.

14. Vorrichtung nach einem der Ansprüche 10 bis 13, ferner mit einer Füllstation (36), die dafür ausgebildet ist, ein gewünschtes Produkt in den Hohlraum (16a) durch die Öffnung (9) des taschenförmigen Mittels (8) zu gießen.

15. Vorrichtung nach einem der Ansprüche 10 bis 14, ferner mit einer Verschließstation (38), die dafür ausgebildet ist, die Öffnung (9) des taschenförmigen Mittels (8) zu verschließen.

16. Verpackungseinheit (100) mit taschenförmigen Mitteln (8), die einen Hohlraum (16a) aufweisen, der ein Produkt enthält, mit einer verschlossenen Öffnung (9), durch die das Produkt in den Hohlraum (16a) eingebracht wurde, und mit einem Griff (27), der einen inneren Abschnitt (43), der sich durch eine weitere Öffnung (25) in dem taschenförmigen Mittel (8) in das Innere des Hohlraums (16a) erstreckt und einen äußeren Abschnitt (44, 45) hat, der sich außerhalb des Hohlraums (16a) erstreckt, **dadurch gekennzeichnet, dass** der äußere Abschnitt (44, 45) des Griffs (27) zwischen einem Paar von nichtverschweißten Begrenzungen (23, 24) der Verpackungseinheit (100) aufgenommen ist, wobei der Griff (27) zwischen dem inneren und dem äußeren Abschnitt einen geformten mittleren Abschnitt (35) aufweist, der zwischen den Begrenzungen (23, 24) der Verpackungseinheit (100) an der weiteren Öffnung (25) verschweißt ist.

17. Verpackungseinheit nach Anspruch 16, wobei der äußere Abschnitt (44, 45) des Griffs (27) ein Ende (45) außerhalb der Begrenzungen (23, 24) der Verpackungseinheit (100) aufweist.

18. Verpackungseinheit nach Anspruch 16 oder 17, ferner mit einer Schweißkontur (17), die dafür ausgebildet ist, den Hohlraum (16a) der Verpackungseinheit (100) außen zu begrenzen.

19. Verpackungseinheit nach einem der Ansprüche 16 bis 18, wobei der mittlere Abschnitt (35) dicker ist als der innere Abschnitt (43) und der äußere Abschnitt (44, 45).

## Revendications

1. Procédé de conditionnement d'un produit, comprenant le formage d'une cavité (16a) destinée à contenir le produit, par injection d'un fluide de formage par une ouverture (9) d'un moyen de poche (8), la fourniture d'un manche (27) s'étendant en partie dans ladite cavité (16a), ***caractérisé en ce que*** ladite fourniture comprend le formage d'une ouverture supplémentaire (25) dans ledit moyen de poche (8) et l'introduction dudit manche (27) dans ladite ouverture supplémentaire (25).

2. Procédé selon la revendication précédente, dans lequel ladite introduction comprend l'interposition partielle dudit manche (27) entre des bordures (23, 24) dudit moyen de poche (8).

3. Procédé selon la revendication 1 ou 2, et comprenant de plus le scellement de ladite ouverture supplémentaire (25).

4. Procédé selon la revendication 3 lorsqu'elle est dépendante de la revendication 2, dans lequel ladite fermeture par soudure comprend le serrage pour scellement desdites bordures (23, 24) sur une portion (35) dudit manche (27).

5. Procédé selon l'une quelconque des revendications 1 à 4, dans lequel ledit formage comprend le gonflement de parois d'un matériau (2) en feuille de manière à définir une pluralité de cavités (16a) communiquant entre elles par un conduit (10).

6. Procédé selon l'une quelconque des revendications 1 à 5, et comprenant de plus le soudage desdits moyens de poche (8) le long d'un contour de soudage (7).

7. Procédé selon l'une quelconque des revendications 1 à 6, dans lequel ledit formage d'une ouverture supplémentaire comprend le découpage d'une portion de rebut (21) desdits moyens de poche (8).

8. Procédé selon l'une quelconque des revendications 1 à 7, dans lequel ladite introduction comprend la préhension dudit manche (27) par des moyens de prise (29) dudit manche (27).

9. Procédé selon l'une quelconque des revendications 1 à 8, dans lequel ladite introduction comprend le déplacement dudit manche (27) avec les moyens de prise (29) dudit manche (27).

10. Dispositif (1) de conditionnement d'un produit, comprenant un poste de formage (5) dans lequel est formée une cavité (16a) par injection d'un fluide de formage par une ouverture (9) d'un moyen de poche (8), un poste d'insertion (26) dans lequel un manche (27) est partiellement inséré à l'intérieur de ladite cavité (16a), ***caractérisé en ce que**,* entre ledit poste de formage (5) et ledit poste d'insertion (26), il est prévu un poste de découpage (18) dans lequel une ouverture supplémentaire (25) est obtenue dans lesdits moyens de poche (8), ouverture supplémentaire (25) à travers laquelle est introduit ledit manche (27).

11. Dispositif selon la revendication 10, et comprenant de plus un poste de soudage (4) prévu pour souder lesdits moyens de poche (8) le long d'un contour de soudage (7).

12. Dispositif selon la revendication 10 ou 11, dans lequel ledit poste d'insertion (26) comprend des moyens de prise (29) prévus pour serrer ledit manche (27) et introduire ledit manche (27) dans lesdits moyens de poche (8).

13. Dispositif selon l'une quelconque des revendications 10 à 12, dans lequel ledit poste d'insertion (26) comprend des moyens de mâchoires (33) prévus pour le soudage d'une portion (35) dudit manche (27) entre des bordures (23, 24) desdits moyens de poche (8).

14. Dispositif selon l'une quelconque des revendications 10 à 13, et comprenant de plus un poste de remplissage (36) prévu pour verser un produit désiré dans ladite cavité (16a) par l'intermédiaire de ladite ouverture (9) desdits moyens de poche (8).

15. Dispositif selon l'une quelconque des revendications 10 à 14, et comprenant de plus un poste de scellage (38) prévus pour sceller ladite ouverture (9) desdits moyens de poche (8).

16. Unité de conditionnement (100), comprenant des moyens de poche (8) pourvus d'une cavité (16a) contenant un produit, d'une ouverture scellée (9) par l'intermédiaire de laquelle ledit produit a été inséré dans ladite cavité (16a), et d'un manche (27) ayant une portion intérieure (43) s'avançant à l'intérieur de ladite cavité (16a) par une ouverture supplémentaire (25) desdits moyens de poche (8), et une portion extérieure (44, 45) se projetant à l'extérieur de ladite cavité (16a), ***caractérisée en ce que*** ladite portion extérieure (44, 45) dudit manche (27) est comprise entre deux bordures non soudées (23, 24) de ladite unité de conditionnement (100), ledit manche (27) comprenant une portion centrale profilée (35) entre lesdites portions intérieure et extérieure, soudée entre lesdites bordures (23, 24) de ladite unité de conditionnement (100) au niveau de ladite ouverture supplémentaire (25).

17. Unité de conditionnement selon la revendication 16, dans laquelle ladite portion extérieure (44, 45) dudit manche (27) comprend une extrémité (45) extérieure auxdites bordures (23, 24) de ladite unité de conditionnement (100).

18. Unité de conditionnement selon la revendication 16 ou 17, et comprenant de plus un contour de soudage (7) prévu pour délimiter extérieurement ladite cavité (16a) de ladite unité de conditionnement (100).

19. Unité de conditionnement selon l'une quelconque des revendications 16 à 18, dans laquelle ladite portion centrale (35) est plus épaisse que ladite portion intérieure (43) et ladite portion extérieure (44, 45).
